# EUROPEAN PATENT APPLICATION

(11) **EP 2 181 885 A1**
(43) Date of publication of application: **05.05.2010**
(21) Application number: 08168112.4
(22) Date of filing: 31.10.2008
(51) Int. Cl.: B60N 2/015

(54) **Latch device for removable connection of a seat structure to a motor-vehicle structure**

(71) Applicant: Martur Sunger ve Koltuk Tesisleri Ticaret Sanayi A.S., 80670 Maslak Istanbul (TR)
(72) Inventor: Bracesco, Roberto, 10043, Orbassano (Torino) (IT)
(74) Representative: Notaro, Giancarlo

(57) **Abstract**

A latch device for removable connection of a seat structure to a motor-vehicle structure, comprises a housing (2) and at least one hook (7) for locking a striker member (S). On the front surface of the hook (7) which projects outside of the housing (2) there is fixed a protective shield (10) which masks the entrance of the cavity of the housing (2) and prevents any direct contact between a foreign body and the hook (7) when the seat is in its inoperative condition, in which the inner parts would be accessible.

## Description

The present invention relates to latch devices for removable connection of the structure of a motor-vehicle seat to the motor-vehicle structure. In particular the invention relates to latch devices of the type comprising:
- a supporting body,
- at least one hook pivoted to the supporting body, for engaging and locking a striker bolt carried by the motor-vehicle structure,
- spring means interposed between the pivoted hook and the supporting body, for biasing the pivoted hook towards a position for locking the striker bolt,
- means for causing a rotation of said pivoted hook, against the action of the spring means, towards an opened position, for releasing the striker bolt,
- wherein the hook has a cam-like front surface for cooperation with the striker bolt during the latching stage, for causing a temporary rotation of the pivoted hook towards its opened position following engagement of the striker bolt thereagainst, until the pivoted hook is caused to snap into the position for locking the striker bolt by said spring means.

Latching devices of the above indicated type are conventionally used in motor-vehicles, such as multipurpose vehicles, minivans or vans, for locking one or more tiltable and/or fully removable seats to the motor-vehicle floor panel.

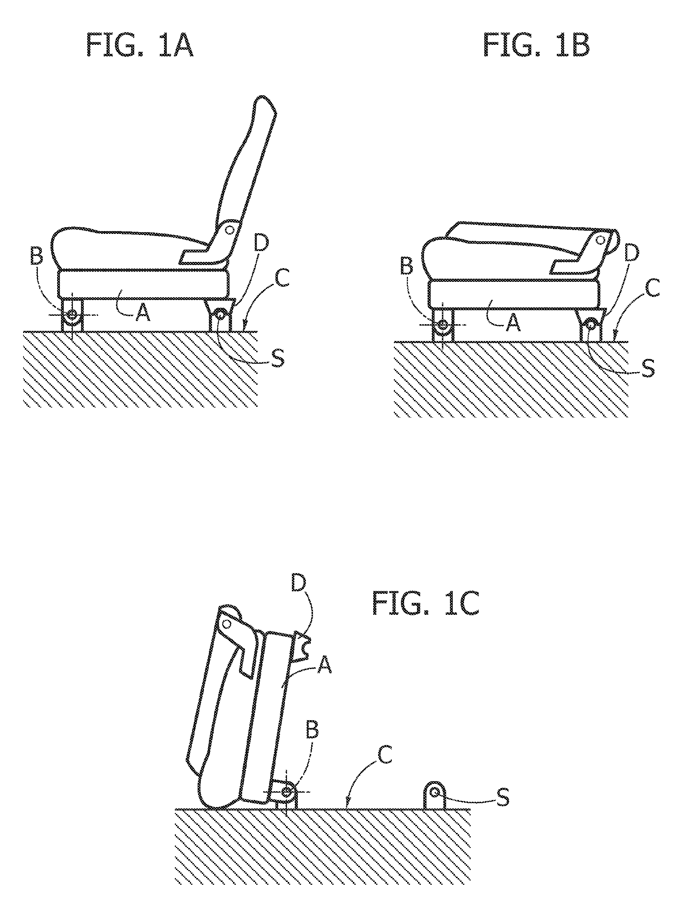

For instance, seats are provided of the type diagrammatically shown in figures 1A, 1B and 1C of the drawings annexed herewith, wherein the seat comprises a base structure A pivoted with its front portion at B to the floor panel C of the motor vehicle and provided at the rear with a pair of latch devices D of the above indicated general type. In the operative condition of the seat (figure 1A) the latch devices D lock the base structure 1 of the seat to the floor panel C by engagement on respective striker bolts S carried by the floor panel. Starting from this operative condition, the backrest of the seat can be tilted above the cushion, as shown in figure 1B, whereupon the entire structure of the seat can be tilted forwardly, after releasing the latch devices D, by a rotation around articulation B. The space previously occupied by the seat above the floor panel is thus free to be used as an extension of the luggage compartment. Clearly, the solution shown in figures 1A, 1B and 1C is presented herein merely by way of example. Latch devices of the type discussed herein can indeed be used in a number of different configurations of seat, for instance also with seats which are fully removable from the floor panel or motor-vehicle rear seats, in which the backrest can be tilted forwardly to extend the luggage compartment, the backrest being adapted to be locked in its condition of normal use onto the structure of the motor-vehicle by means of latch devices of the type discussed herein.

A problem which is encountered in the above described solutions lies in that when the seat is in its inoperative tilted condition (see figure 1C) the latch devices have their mechanical parts, and in particular the locking hooks, in an accessible condition, which could involve the risk of injures to the user during operations for loading or unloading the luggage. Furthermore in the case of vehicles with more than two rows of seats, the above mentioned devices can become dangerous for the passengers seated beyond the second row which are in the above described situation.

In order to overcome this drawback, it has been proposed to pivotally support the latch devices onto the base structure of the seat and to connect them to a linkage which cause these devices to rotate to a retracted and hidden position following the movement of the seat to its inoperative condition. This solution solves the above mentioned problem, but introduces new drawbacks because of the relative complexity, the weight and the additional cost of these devices.

The object of the present invention is that of providing a latch device of the above mentioned type which on one hand avoids any risk for the user to collide against the locking hook or the structure supporting the hook when the seat is in its inoperative condition and, on the other hand, is still provided with an extremely simple and low cost structure.

In view of achieving this object, the invention provides a latch device having all the features which have been indicated at the beginning of the present description and further **characterized in that** on said pivoted hook there is fixed a protective shield, which prevents any contact of a foreign body with said hook or parts associated thereto.

In the preferred embodiment of the invention, the latch device is of the type in which said supporting body defines a cavity opened at one side and in which said pivoted hook is arranged within said cavity and has its front surface projecting from said opened side of said cavity. Said protective shield is fixed to the front surface of the pivoted hook so as to remain at the outside of the supporting body and so as to mask the opened side of said cavity. Said protective shield has substantially rounded surfaces and it itself is adapted to define a cam-like surface for direct engagement of the striker bolt during the latching stage, in order to cause the temporary rotation of the pivoted hook towards its opened position during this stage.

Also in the case of the preferred embodiment, the latch device is of the type comprising two pivoted hooks, pivotally mounted on the supporting body around a same articulation axis, in planes which are parallel and arranged side-by-side with each other, for rotating in the same direction. A first hook has the function of stopping the striker bolt and the second hook has the function of taking out any plays, in order to avoid vibrations and any resulting noise due to small relative movements between the striker bolt and the latch device during travel of the motor-vehicle, when the seat is in its condition of normal use. Latch devices with double hook, of the above indicated type, are known per se (see for example FR-A-2 539 603, DE 38 28 223 C1, US-A-6 152 515).

Further features and advantages of the invention will become apparent from the description which follows with reference to the annexed drawings, given purely by way of non limiting example, in which:
- figures 1A, 1B, 1C, which have been already described above, show three different operative conditions of a motor-vehicle seat using a pair of latch devices, to which the latch device according to the invention can be applied,
- figure 2 is a perspective view of a preferred embodiment of the latch device according to the invention,
- figure 3 is a cross-sectional view of the device of figure 1,
- figure 4 is a perspective view of the device of figure 1, with part of its housing removed,
- figure 5 is a perspective view of the inner mechanism of the device of figure 1, and
- figure 6 is a further perspective view of the device of figure 1.

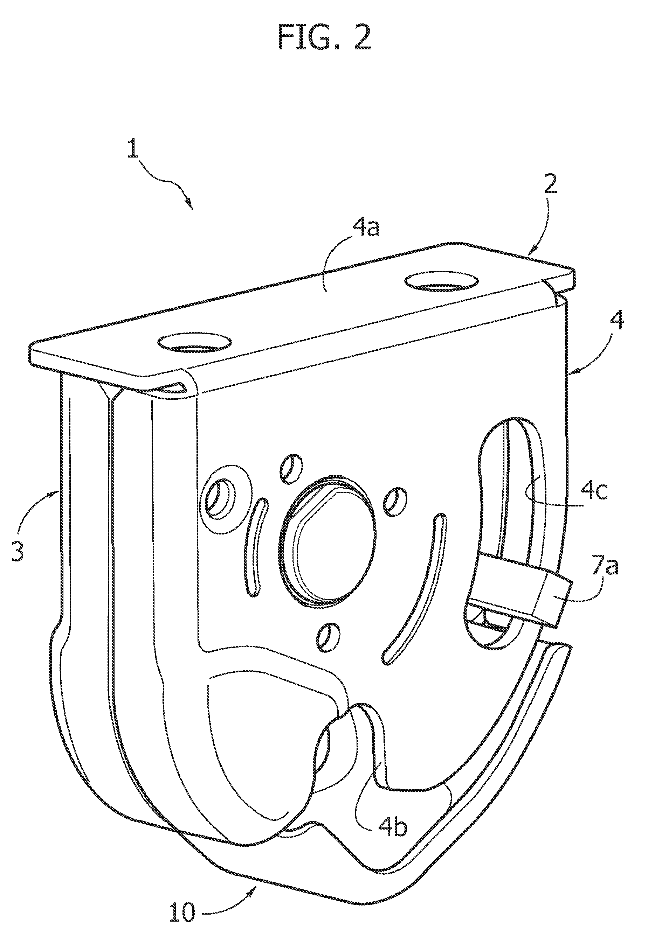

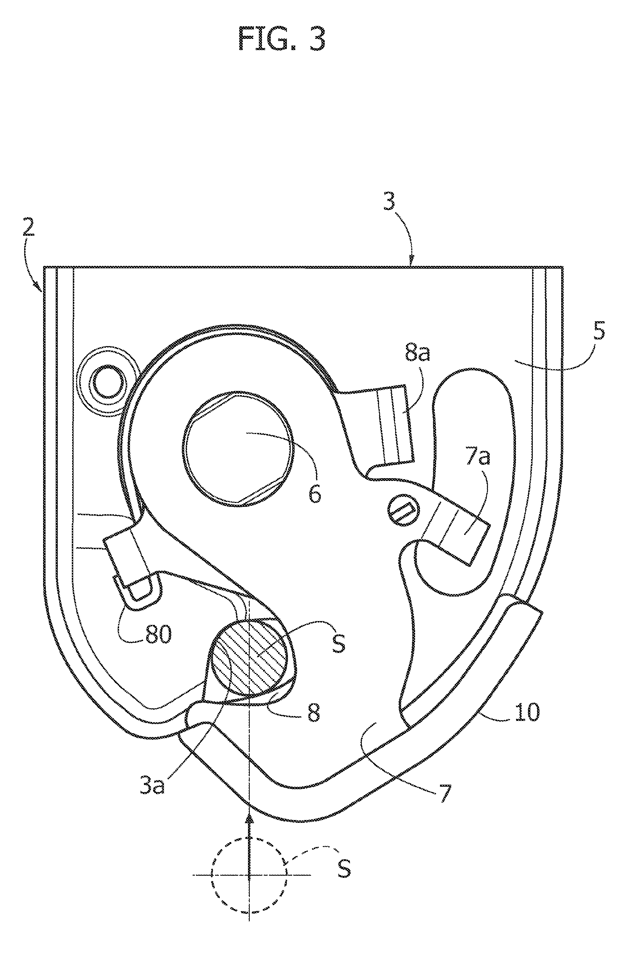

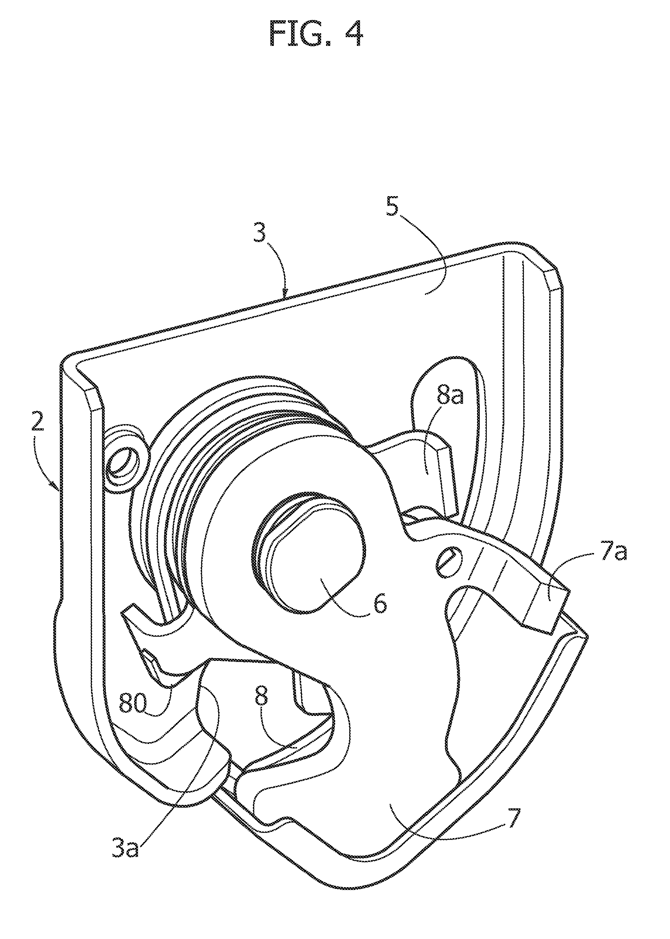

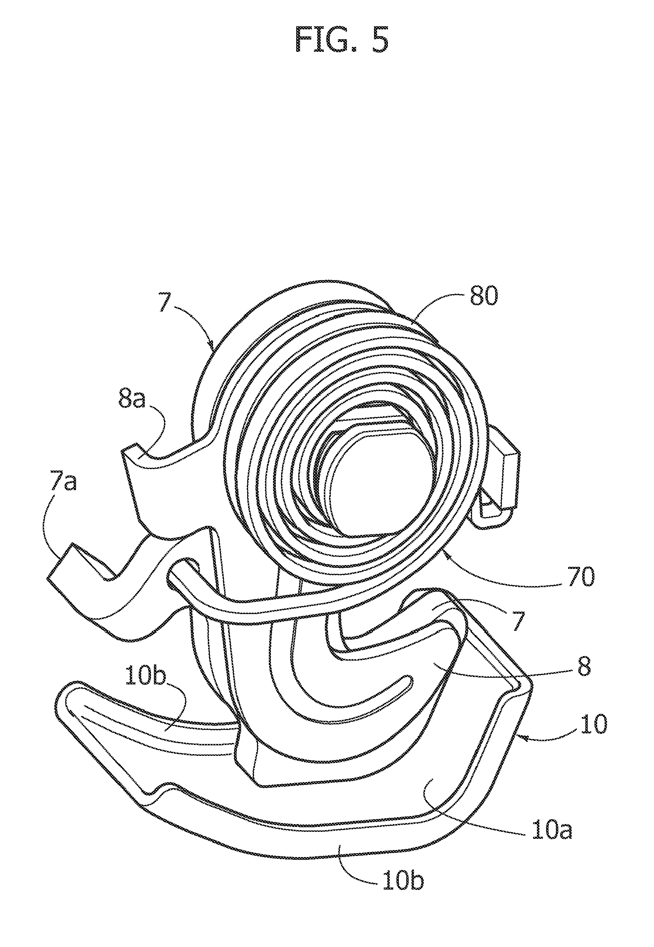

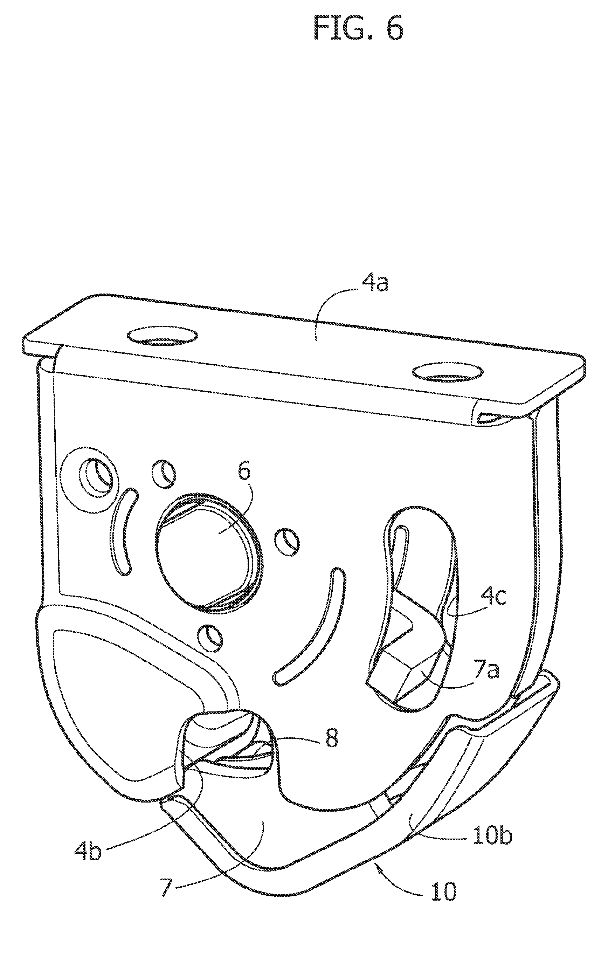

With reference to figures 2-6, numeral 1 generally designates a latch device according to the invention comprising a supporting body 2 in form of a housing of sheet metal constituted by two half-bodies of sheet metal 3, 4, coupled and connected with each other by means of any suitable technique (such as by welding or riveting or screwing) so as to define a cavity 5 therebetween opened on one side. With reference to figure 2, the half-body 4 has one upper end with a wall 4a having holes for engagement of fixing screws (not shown) by which device 1 can be fixed below the base structure of the motor-vehicle seat. As shown in figure 2, 3, the two half-bodies 3, 4 have planar and parallel main walls which are facing, and spaced apart from, each other, between which an articulation pin 6 extends. Pin 6 is used for articulation around axis 6a of first and second hooks 7, 8. Both hooks 7, 8 are for holding a striker bolt S (figure 3), which is anchored to the motor-vehicle floor panel, within the cavity 5 when the seat is in its condition of normal use, such as illustrated in figure 1A. The edges of the two half-bodies 3, 4 at the opened side of the housing have cut-outs 3a (see figure 3) and 4b (see figure 2) in which there is received and held the striker member S (whose axis is oriented perpendicularly to the vertical longitudinal plane of the motor-vehicle) when the seat is in its condition of normal use. In this condition (see figure 3) the first hook 7 only fulfils a holding function and a function of supporting the vertical forces applied by the bolt S (also in case the fixtures for the safety belts are mounted on-board the backrest), whereas the second hook 8 fulfils a function of locking the bolt and taking up any plays. The two hooks 7, 8 are subjected to the action of respective springs 70, 80 which are wound in a spiral form around axis 6a and are each interposed between the respective hook and the structure of the housing 2. Both the springs tend to bid with respective hooks 7, 8 towards the locking position shown in figure 3. Furthermore the hook 7 has a tab 7a projecting through an arched slot 4c of the half body 4 which is to be connected to an actuating device of any type (such as a transmission including a Bowden cable). The actuating device is adapted to cause a rotation of the first hook 7 in an anti-clockwise direction, with reference to figure 3, i.e. towards an opened position, for releasing the striker bolt S, against the action of the respective spring 70. This rotation of the first hook 7 towards the opened position causes a rotation also of the second hook 8 towards its respective opened position, following engagement of the tab 7a against a tab 8a of the second hook 8 (see figures 4, 5).

In the conventional devices, when the seat is brought from an inoperative condition to a condition of normal use, by lowering the latch device above the respective striker bolt carried by the floor panel, the striker bolt, due to the relative movements between the bolt and the latch device, acts on the front outer surface of the hook 7, which projects from the cavity of the housing 2 causing a temporary rotation of the first hook 7, against the action of spring 70, towards its opened position, due to the cam shape of the surface of the hook. This temporary rotation of the first hook 7 towards its opened position causes a corresponding rotation of the second hook 8 towards its respective opened position following engagement of the tab 7a against tab 8a. Once the striker bolt S has overcome the active ends of hooks 7, 8, it is received within the housing 2, against the edges of the cut-outs 3a, 4b and is held there by hooks 7, 8 which snap into their locking conditions under the action of springs 70, 80.

According to the invention, only on the surface of the first hook 7 there is fixed (for instance welded) a protective shield 10 which in the non-limiting example illustrated herein, is in form of a plate of metal sheet having a curved shape, with rounded edges, with a central part 10a and two side wings 10b (see in particular figure 5). The protective shield 10 is arranged totally at the outside of housing 2 and masks the opened side of the inner cavity 5 of the device, preventing thereby any direct contact between a foreign body and the hooks 7, 8 or any other projecting surfaces. This is true in particular when the seat is in its inoperative condition, with the latch device arranged in a condition where it would be theoretically accessible for the user.

Not only the protective shield 10, prevents any risk of injures to the user following an accidental contact with the locking hooks, but also fulfils the function, with its outer surface, of a cam surface adapted to come into direct contact with the striker bolt S during the latching stage for causing a temporary rotation of the hooks 7, 8 towards their opened position when the striker bolt is locked by the latch devices following a movement of the seat to its normal operative condition. At its outer area for contact and sliding of the striker bolt S a central projection which reduces friction during shield 10 may also have the engagement and limits the wear of any protective layer (paint, zinc-coating, etc.) this small surface.

As it is clearly apparent from the foregoing description, the device according to the invention thus solves efficiently the safety problem for the user against the risk of injures following accidental contact with the latch device when the seat is in its inoperative condition, while at the same time it maintains an extremely simple, efficient and low cost structure. As indicated above, the device according to the invention is of general application and may also be used for instance for locking the backrest on striker bolts positioned on side uprights on the motor-vehicle. Also in this case, the protective shield fulfils its function.

Naturally, while the principle of the invention remains the same, the details of construction and the embodiments may widely vary with respect to what has been described and illustrated purely by way of example, without departing from the scope of the present invention.

## Claims

1. Latch device for removable connection of a seat structure to a motor-vehicle structure, comprising:
- a supporting body (2),
- at least one hook (7, 8) pivoted to the supporting body (2) for engaging and locking a striker bolt (S) carried by the motor-vehicle structure,
- spring means (70, 80) interposed between the pivoted hook (7, 8) and the supporting body (2), for biasing the pivoted hook (7, 8) towards a position for locking the striker bolt (S),
- means (7a, 8a) for causing a rotation of said pivoted hook (7, 8), against the action of said spring means (70, 80), towards an opened position, for releasing the striker bolt (S),
wherein the pivoted hook (7, 8) has a cam-like front surface for cooperation with the striker bolt (S) engages during the latching stage, for causing a temporary rotation of the pivoted hook (7, 8) towards its opened position following engagement of the striker bolt until the pivoted hook (7, 8) is caused to snap into its position for locking the striker bolt by said spring means (70, 80),
**characterized in that** on said front surface of the hook (7) there is fixed a protective shield which prevents any contact between a foreign body and said hook (7, 8).

2. Latch device according to claim 1, **characterized in that** said supporting body defines a cavity (5), opened at one side, within which there is arranged said pivoted hook (7, 8), said protective shield being fixed to one front end of said pivoted hook (7) which projects outside of said cavity.

3. Latch device according to claim 2, **characterized in that** said protective shield has a cam surface for direct engagement against said striker bolt (S) during the latching stage, so as to cause a temporary rotation of said pivoted hook (7, 8) towards its opened position for enabling said striker bolt to be received within said cavity.

4. Latch device according to any of the previous claims, **characterized in that** it comprises a first hook (7) for holding the striker bolt (S) and the second hook (8) for locking said striker bolt (S) and for taking up any plays, said first and second hooks (7, 8) being pivotally mounted around the same axis (6a) for rotating in the same direction and being associated to respective spring means (70, 80) which bias them towards the respective positions for locking the striker bolt, said protective shield being fixed to one of said hooks.

5. Latch device according to claim 4, **characterized in that** the supporting body is in form of a housing (2) with two planar and parallel main walls, which are spaced from each other, an articulation pin (6) extending between said walls for pivotally mounting said first and second hooks (7, 8), said first and second hooks being arranged in planes which are parallel and arranged side-by-side with each other.

6. Latch device according to claim 5, **characterized in that** said protective shield (10) is in form of a plate of metal sheet having a curved shape and substantially rounded edges.

7. Latch device according to claim 4, **characterized in that** said protective shield (10) is fixed to said first hook (7) and that said first hook (7) and said second hook (8) have cooperating appendages (7a, 8a) so that a rotation of the first hook (7) towards its opened position causes a rotation of said second hook (8) towards its opened position.
